# DEMANDE DE BREVET EUROPEEN

(11) **EP 0 556 078 A1**
(43) Date de publication de la demande: **18.08.1993**
(21) Numéro de dépôt: 93400177.7
(22) Date de dépôt: 26.01.1993
(51) Int. Cl.: B64C 25/00, B64C 25/58, F16F 9/46

(54) **Amortisseur de jambe de train d'atterrissage d'aéronef**

(30) Priorité: 04.02.1992 FR 9201242
(71) Demandeur: MESSIER BUGATTI, F-78140 Velizy Villacoublay (FR)
(72) Inventeur: Veaux, Jacques, F-92320 Chatillon (FR); Derrien, Michel, F-78000 Versailles (FR)
(74) Mandataire: Jaunez, Xavier

(57) **Abrégé**

L'invention concerne un amortisseur de jambe de train d'atterrissage du type comportant un caisson et une tige coulissante, avec un fond délimitant une chambre inférieure de fluide hydraulique qui communique par un diaphragme avec une chambre supérieure de fluide hydraulique adjacente à une chambre de gaz sous pression ménagée en partie haute du caisson.

Conformément à l'invention, la tige coulissante 102 réalisée sous forme télescopique, avec une tige extérieure 131 et une tige intérieure 132 qui est en appui direct contre une cloison intermédiaire 112 qui constitue le fond précité, lorsque l'amortisseur est détendu ou sous charge statique ; l'amortisseur comporte en outre un actionneur linéaire 150.1 logé dans la tige intérieure 132, et dont l'enclenchement permet d'obtenir un rehaussement du train d'atterrissage lorsque l'aéronef est à l'arrêt ou en déplacement lent au sol. Un double compas 124, 127 est en outre prévu pour la reprise des efforts de torsion structuraux.

## Description

L'invention concerne les amortisseurs de jambe de train d'atterrissage d'aéronefs, en particulier les trains relevables d'avions.

Il est connu de réaliser un amortisseur de jambe de train relevable d'avion, du type comportant un caisson et une tige coulissant dans ledit caisson, ladite tige comportant un fond délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson.

Dans certaines situations, lorsque l'avion est à l'arrêt ou en déplacement lent au sol, on souhaite pouvoir modifier l'assiette de l'avion, c'est-à-dire l'inclinaison de son axe longitudinal.

Une approche possible consiste alors à essayer de modifier la longueur du train avant, sans toucher aux atterrisseurs principaux : en effet, si l'on parvient à allonger le train avant, on peut obtenir l'assiette désirée de l'avion qui est à l'arrêt ou en déplacement lent au sol.

Dans ce cas, il est intéressant de pouvoir disposer d'un train à rehaussement pour l'atterrisseur avant.

Il convient toutefois de ne pas confondre l'organisation d'un rehaussement du train lorsque l'avion est à l'arrêt ou en déplacement lent au sol, avec la question d'un rehaussement visant à permettre à l'atterrisseur de rouler sur des sols irréguliers et même de franchir des obstacles de dimensions importantes. Dans le dernier cas, on cherche en effet à modifier la courbe isotherme de l'amortisseur (variations de l'effort amortisseur en fonction de la course d'enfoncement), par exemple en prévoyant une structure telle que l'amortisseur soit mono-chambre à l'atterrissage, et bi-chambre au roulage (après rehaussement), comme décrit dans le document FR-A-2.601.097.

L'amortisseur décrit dans ce document comporte ainsi un fond mobile délimitant supérieurement une chambre de gaz à haute pression qui est délimitée inférieurement par un piston dont la tige traverse le fond mobile, et une chambre inférieure de fluide hydraulique qui est délimitée par ce piston et le fond de la tige coulissante, et qui est alimentée par une source commandable reliée à la génération hydraulique de l'avion. La structure de cet amortisseur résulte de l'objectif recherché qui est le passage de bosses au roulage, de sorte qu'un tel amortisseur ne serait pas approprié pour la seule recherche d'un rehaussement statique du train lorsque l'avion est à l'arrêt ou en déplacement lent au sol.

L'approche statique du rehaussement, pour un avion à l'arrêt ou en déplacement lent au sol, consiste simplement à générer un effort équivalent à la charge statique de l'atterrisseur, afin de relever le caisson de l'amortisseur par rapport à la tige coulissante (cette dernière est en effet immobile, de sorte que l'allongement de l'amortisseur par sortie de sa tige coulissante se traduit par une remontée du caisson dudit amortisseur).

L'invention a pour objet de résoudre ce problème technique, en concevant un amortisseur dont la structure permette d'obtenir aisément un rehaussement du train lorsque l'avion est à l'arrêt ou en déplacement lent au sol, sans exiger l'utilisation de la génération hydraulique de l'avion, c'est-à-dire sans exiger que les moteurs soient activés.

L'invention a aussi pour objet de réaliser un amortisseur de conception simple, pour lequel l'obtention d'un rehaussement soit aisément commandable, sans risque de perturbations et/ou de fuites au regard des circuits de la génération hydraulique de l'avion.

Il s'agit plus particulièrement d'un amortisseur de train d'atterrissage d'aéronef, comportant un caisson et une tige coulissant dans ledit caisson, avec un fond délimitant une chambre inférieure de fluide hydraulique qui communique, par l'intermédiaire d'un diaphragme, avec une chambre supérieure de fluide hydraulique adjacente à une chambre de gaz sous pression ménagée en partie haute du caisson, caractérisé en ce que la tige coulissante est réalisée sous forme télescopique, avec une tige extérieure coulissant dans le caisson et présentant une cloison intermédiaire qui constitue le fond précité, et une tige intérieure coulissant dans la tige extérieure de l'autre côté de cette cloison par rapport à la chambre inférieure de fluide hydraulique, en étant en appui direct contre ladite cloison lorsque l'amortisseur est détendu ou sous charge statique, et en ce qu'il comporte en outre un actionneur linéaire logé dans la tige intérieure et dont l'enclenchement permet d'obtenir un rehaussement du train d'atterrissage lorsque l'aéronef est à l'arrêt ou en déplacement lent au sol, et au moins un compas extérieur pour la reprise des efforts de torsion structuraux auxquels est soumise la tige coulissante télescopique.

Avantageusement, l'amortisseur comporte des moyens autonomes pour la commande de l'actionneur linéaire, lesdits moyens autonomes étant au moins en partie intégrés dans la tige intérieure.

La commande autonome d'un tel actionneur linéaire indépendant permet ainsi de rehausser le train sans avoir à utiliser obligatoirement la génération avion.

Selon un mode d'exécution particulier, l'amortisseur comporte un double compas pour la reprise des efforts de torsion structuraux, avec un compas inférieur reliant la tige intérieure à la tige extérieure, et un compas supérieur reliant la tige extérieure à un manchon monté tournant sur le caisson.

En variante, l'amortisseur comporte un compas unique reliant la tige intérieure à un manchon monté tournant sur le caisson, ainsi qu'un moyen complémentaire d'anti-rotation entre la tige intérieure et la tige extérieure.

De préférence alors, le moyen complémentaire d'anti-rotation est au moins en partie intégré dans la tige extérieure.

Conformément à un premier type d'amortisseur conforme à l'invention, l'actionneur linéaire est un actionneur électro-mécanique à système vis-écrou dont la vis est bloquée axialement et dont l'écrou est solidaire de la cloison intermédiaire.

Avantageusement alors, l'écrou du système vis-écrou est monté en extrémité d'un manchon central solidaire de la cloison intermédiaire, dans lequel pénètre la vis dudit système vis-écrou, ledit écrou se déplaçant dans une chambre supérieure de la tige intérieure et coopérant avec une saillie interne de ladite tige intérieure pour former butée en position de rehaussement maximum, la tige intérieure présentant en outre une chambre inférieure dans laquelle est reçu, au moins en partie, un ensemble moto-réducteur d'entraînement. En particulier, le moyen complémentaire d'anti-rotation est constitué par un ergot coulissant dans une lumière axiale associée, ledit ergot étant de préférence solidaire de l'écrou et pénétrant dans une lumière axiale ménagée dans la paroi de la tige intérieure.

Conformément à un autre type d'amortisseur conforme à l'invention, l'actionneur linéaire est un vérin hydraulique dont la tige est solidaire de la cloison intermédiaire et coulisse dans une chambre supérieure de la tige intérieure, ladite tige intérieure présentant en outre une chambre inférieure dans laquelle sont prévues une électro-pompe et une réserve pressurisée de fluide hydraulique.

De préférence alors, la tige intérieure comporte une cloison intermédiaire délimitant lesdites chambres inférieure et supérieure, ladite cloison portant un moyen de verrouillage axial, par exemple un moyen mécanique à griffes, coopérant avec la tige du vérin hydraulique lorsque la tige intérieure est en appui contre la cloison intermédiaire de la tige extérieure, c'est-à-dire lorsque l'amortisseur est détendu ou sous charge statique.

En particulier le moyen complémentaire d'anti-rotation comporte des cames homologues de la tige intérieure et de la cloison intermédiaire de la tige extérieure, lesdites cames coopérant mutuellement lorsque l'amortisseur est détendu ou sous charge statique. En variante, le moyen complémentaire d'anti-rotation comporte un petit compas reliant la tige intérieure et la tige extérieure.

D'autres caractéristiques et avantages de l'invention apparaîtront plus clairement à la lumière de la description qui va suivre et des dessins annexés, concernant un mode de réalisation particulier, en référence aux figures où :

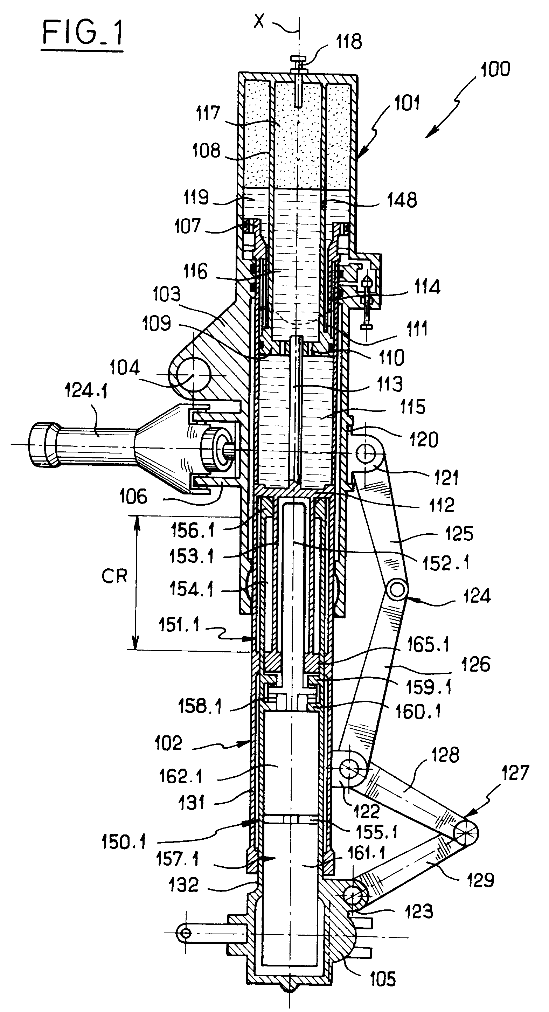

- la figure 1 est une coupe axiale d'un amortisseur conforme à l'invention à double compas pour la reprise des efforts de torsion structuraux, et dans lequel l'actionneur linéaire est un actionneur électro-mécanique à système vis-écrou , dont l'ensemble moto-réducteur d'entraînement associé est ici intégré dans la tige intérieure de la tige coulissante télescopique, la position illustrée correspondant à l'amortisseur détendu (sans charge statique) et non rehaussé;

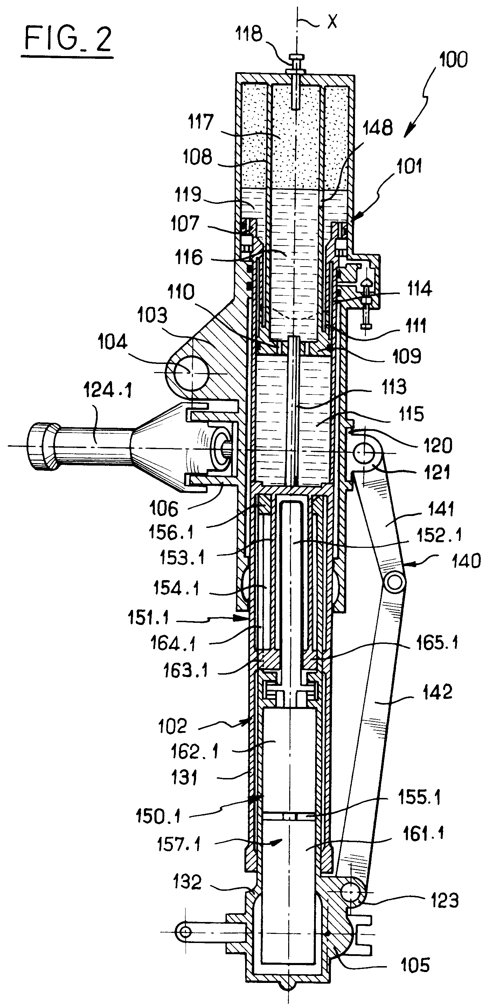

- la figure 2 illustre une variante de l'amortisseur précédent, avec un compas unique pour la reprise des efforts de torsion structuraux, et un moyen complémentaire d'anti-rotation à ergot et lumière axiale ;

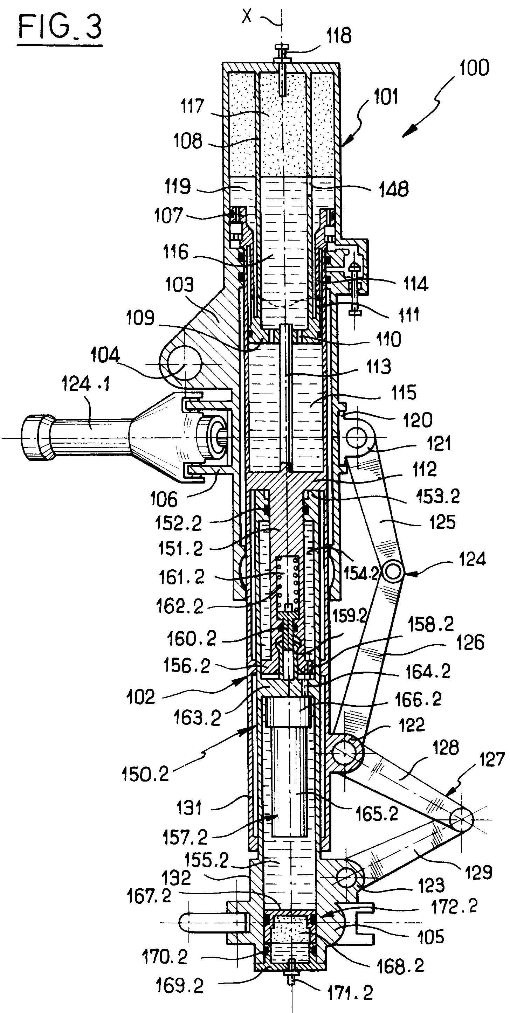

- la figure 3 est une coupe axiale d'un autre type d'amortisseur conforme à l'invention, à double compas pour la reprise des efforts de torsion structuraux, et dans lequel l'actionneur linéaire est un vérin hydraulique, dont l'électro-pompe d'entraînement est ici intégrée dans la tige intérieure de la tige coulissante télescopique, la position illustrée correspondant là encore à l'amortisseur détendu (sans charge statique) et non rehaussé ;

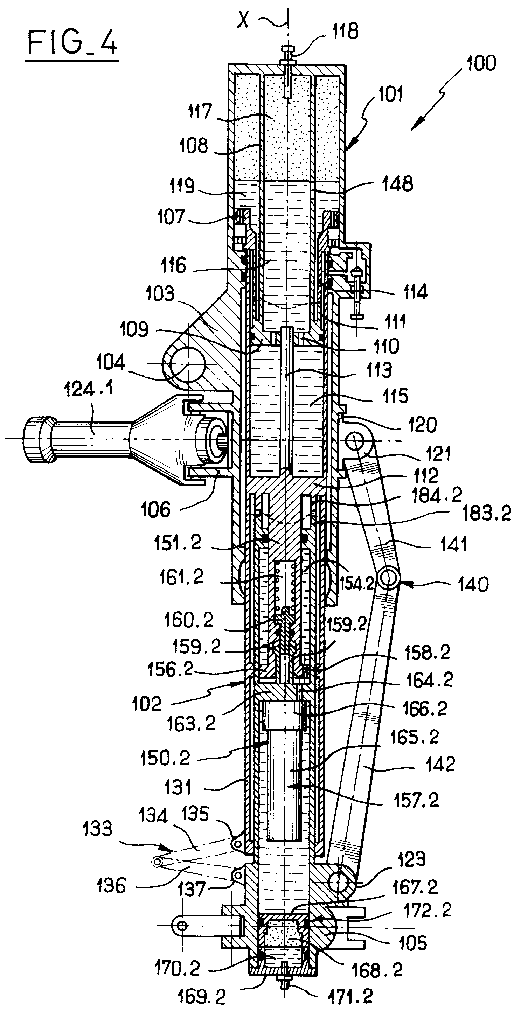

- la figure 4 illustre une variante de l'amortisseur précédent, avec un compas unique pour la reprise des efforts de torsion structuraux, et un moyen complémentaire d'anti-rotation à cames homologues, éventuellement remplacé par un petit compas reliant les deux composants de la tige coulissante télescopique ;

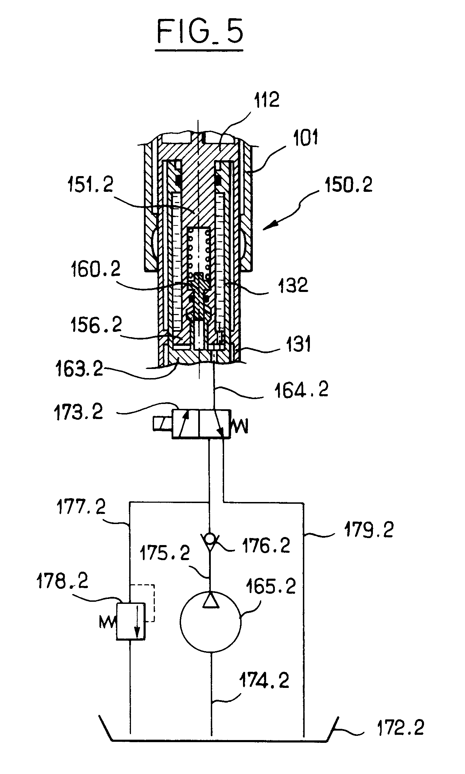

- la figure 5 illustre schématiquement les organes électro-hydrauliques associés à la commande du vérin de rehaussement d'un amortisseur conforme à la figure 3 ou 4, lesdits organes étant en l'espèce logés à l'intérieur de la tige intérieure de la tige coulissante télescopique.

La figure 1 illustre un amortisseur 100 de jambe de train d'atterrissage d'aéronef conforme à l'invention, comportant un caisson 101 et une tige 102 coulissant dans ledit caisson, coaxialement à l'axe X de celui-ci. L'amortisseur 100 comporte tout d'abord un certain nombre d'organes de type conventionnel, dont la structure va être décrite succinctement ci-après.

Le caisson 101 comporte un axe d'articulation (non représenté) avec la structure de l'avion, et un appendice 103 correspondant à l'axe d'articulation 104 associé au dispositif de contreventement de l'amortisseur, car il s'agit ici d'un train d'atterrissage relevable. Des goussets 106 permettent l'articulation de deux vérins 124.1 commandant l'orientation du train de roues, la tige de ces vérins étant reliée à un manchon tournant 120 coaxial au caisson 101.

Conformément à un aspect essentiel de l'invention, la tige coulissante 102 est réalisée sous forme télescopique, c'est-à-dire qu'elle est dédoublée en deux composants séparés, avec une tige extérieure 131 coulissant dans le caisson 101, et une tige intérieure 132 coulissant dans la tige extérieure 131. La tige extérieure 131 comporte un fond fixe constitué par une cloison intermédiaire 112, qui délimite une chambre inférieure de fluide hydraulique 115 communiquant, par l'intermédiaire d'un diaphragme, avec une chambre supérieure de fluide hydraulique 116 adjacente à une chambre de gaz sous pression 117 ménagée en partie haute du caisson 101.

La partie haute de la tige extérieure 131, c'est-à-dire la partie s'étendant au-dessus (sur la figure 1) de la cloison intermédiaire 112, s'étend ainsi vers le haut jusqu'à un élargissement supérieur 107, qui se déplace dans la partie supérieure du caisson 101. Le caisson 101 comporte une tige plongeuse 108, dont le fond, référencé 109, coulisse dans la partie supérieure de la tige extérieure 131. De façon connue en soi, la tige plongeuse 108 présente, à l'extérieur de son fond 109, et au-dessus de celui-ci, une came hélicoïdale 111 coopérant avec une came homologue 114 solidaire de la partie haute 107 de la tige extérieure 131. Les cames 111 et 114 assurent ainsi le recentrage et le maintien automatique du calage angulaire respectif entre le caisson et la tige coulissante, c'est-à-dire plus précisément entre le caisson et la partie haute de la tige extérieure de ladite tige coulissante télescopique. La cloison intermédiaire 112 délimite, avec le fond fixe 109 de la tige plongeuse 108, une chambre inférieure 115 de fluide hydraulique, ce fond 109 étant traversé en son centre par une tige 113 solidaire de la cloison intermédiaire 112, et présentant, autour de celle-ci, des orifices de laminage 110 assurant la fonction diaphragme pour l'amortissement hydraulique, de façon conventionnelle. La chambre inférieure 115 de fluide hydraulique communique ainsi, par l'intermédiaire du diaphragme, avec une chambre supérieure 116 de fluide hydraulique adjacente à une chambre d'air sous pression 117, dont le gonflage est assuré par une valve de type conventionnel 118. Les chambres 116 et 117 occupent ainsi l'intérieur de la tige plongeuse 108, en partie haute du caisson 101 de l'amortisseur, et un certain volume de fluide hydraulique 119 occupe la chambre annulaire entourant cette tige plongeuse 108, grâce à des orifices de communication 148 ménagés dans ladite tige plongeuse.

La tige intérieure 132 coulisse dans la tige extérieure 131, c'est-à-dire dans l'espace situé de l'autre côté de la cloison intermédiaire 112 par rapport à la chambre inférieure de fluide hydraulique 115. Ainsi que cela est visible sur la figure, la tige intérieure 132 est en appui direct, par sa partie haute, contre la cloison intermédiaire 112 lorsque l'amortisseur est détendu. Il en va de même lorsque l'amortisseur est sous charge statique, ainsi que cela sera décrit plus loin.

La tige intérieure 132 porte inférieurement un train de roues, et l'on distingue seulement ici l'axe 105 associé à la fusée correspondante. La reprise des efforts de torsion structuraux auxquels est soumise la tige coulissante télescopique 102 est ici assurée par un double compas extérieur, avec un compas supérieur 124 et un compas inférieur 127. Le compas supérieur 124 est composé de deux bras 125 et 126, et assure la liaison entre la tige extérieure 131 et le manchon tournant 120 du caisson 101, par des chapes respectives associées 122 et 121. Le compas inférieur 127 est composé de deux bras articulés 128 et 129, et assure la liaison entre la tige intérieure 132 et la tige extérieure 131, par des chapes respectives associées 123 et 122. Il convient de noter que la chape 122 est ici commune aux deux compas, mais il ne s'agit naturellement que d'un mode de réalisation particulier, et il sera possible d'utiliser deux chapes séparées.

L'amortisseur 100 comporte en outre un actionneur linéaire 150.1 qui est ici totalement intégré dans la tige intérieure 132 de la tige coulissante télescopique 102. L'actionneur linéaire 150.1 est en l'espèce ici un actionneur électro-mécanique à système vis-écrou 151.1, dont la vis 152.1 est bloquée axialement et dont l'écrou 165.1 est solidaire de la cloison intermédiaire 112 de la tige extérieure 131.

La cloison intermédiaire 112 se prolonge inférieurement par un manchon central 153.1, dans lequel pénétre la vis 152.1 du système vis-écrou, ledit manchon central portant l'écrou 165.1 dudit système. La tige intérieure 132 se prolonge vers le haut, en entourant la vis du système vis-écrou, jusqu'à des saillies d'extrémité 156.1. L'écrou 165.1 se déplace ainsi dans une chambre supérieure 154.1 de la tige intérieure 132 et coopère avec les saillies internes 156.1 de cette tige intérieure pour former butée en position de rehaussement maximum, la course de rehaussement étant ici référencée CR. En position détendue, qui est celle de la figure 1, la tige intérieure est en appui direct par ses saillies internes 156.1 contre le fond 112 de la tige extérieure 131. Lorsque l'amortisseur de jambe est sous charge statique, les deux composants 131 et 132 de la tige coulissante télescopique s'enfoncent comme un ensemble monolithique dans le caisson de l'amortisseur, c'est-à-dire que la tige intérieure 132 reste en appui contre la cloison 112 de la tige extérieure 131. De ce fait, le compas supérieur 124 présente une disposition différente sous charge statique, alors que le compas inférieur 127 est quant à lui dans la même position. Lorsque l'actionneur linéaire 150.1 est enclenché, la rotation de la vis 152.1 bloquée axialement provoque le déplacement de l'écrou 165.1, et par suite l'éloignement relatif des deux composants de la tige coulissante télescopique 102, ce qui permet d'obtenir un rehaussement du train d'atterrissage lorsque l'aéronef est à l'arrêt ou en déplacement lent au sol.

Ainsi que cela est aisé à comprendre, il devient possible d'obtenir une course de rehaussement CR importante, et notamment pouvant dépasser la course de rentrée de la tige coulissante sous charge statique. Il convient de noter en outre que l'extrémité supérieure de la vis du système vis-écrou n'est pas en contact avec la cloison intermédiaire 112 de la tige extérieure 131, lorsque l'amortisseur est détendu ou sous charge statique, c'est-à-dire lorsque la tige intérieure 132 est en appui par ses saillies internes 156.1 contre ladite cloison intermédiaire 112. On évite ainsi la transmission d'efforts verticaux au système vis-écrou, lequel système n'est concerné par les efforts verticaux que lors du rehaussement du train d'atterrissage.

Des butées axiales 158.1, disposées entre des épaulements associés 159.1 et 160.1 de la tige intérieure 132, sont prévues pour la reprise des efforts axiaux auxquels est soumis le système vis-écrou 151.1. En-dessous de ces butées axiales, qui sont de préférence à rouleaux, la tige intérieure 132 comporte une chambre inférieure 155.1, dans laquelle est reçu, ici en totalité, un ensemble moto-réducteur d'entraînement 157.1. L'ensemble moto-réducteur comporte ainsi un moteur électrique 161.1, et un réducteur 162.1, qui peut être par exemple du type à deux étages épicycloïdaux, et en sortie duquel est montée la vis (qui est à billes ou à rouleaux) du système vis-écrou. Ces moyens autonomes de commande sont ici intégrés entièrement dans la tige intérieure 132 : il sera cependant possible d'agencer en variante le moteur électrique, et éventuellement aussi le réducteur associé, à l'extérieur de la tige intérieure 132, afin de faciliter une éventuelle intervention au sol sur ces moyens. L'actionnement du moteur électrique 161.1 provoque ainsi la rotation de la vis à billes 152.1 et par suite l'allongement télescopique de la tige coulissante 102 pour obtenir le rehaussement désiré du train. Pour le rabaissement du train, il suffit d'inverser la commande du moteur électrique, ce qui ramène l'amortisseur à la position initiale qu'il occupait sous charge statique avant rehaussement. La position rehaussée sera de préférence maintenue par un frein (non représenté) activé par la coupure de l'alimentation, installé à la sortie du moteur. Dans le cas où le système vis-écrou serait irréversible, la position haute serait alors maintenue par cette irréversibilité.

L'agencement à double compas 124 et 127 permet d'assurer à la fois la transmission des efforts de torsion venant de la commande et les efforts de sol, et l'anti-rotation entre les deux composants de la tige coulissante télescopique 102. Il est cependant possible de prévoir en variante un système à compas unique pour la reprise des efforts de torsion structuraux. Une telle variante est illustrée sur la figure 2.

L'amortisseur 100 illustré sur la figure 2 comporte un grand nombre de composants identiques à ceux de l'amortisseur précédemment décrit : ces composants sont pour plus de commodité affectés des mêmes références, sans être à nouveau décrits ci-après. L'amortisseur 100 se différencie du mode de réalisation précédemment décrit par la présence d'un système à compas unique 140, constitué par deux bras articulés 141 et 142, reliant la tige intérieure 132 au manchon tournant 120 par les chapes associées 123 et 121.

Il est alors nécessaire de prévoir un moyen complémentaire d'anti-rotation entre la tige intérieure 132 et la tige extérieure 131. En l'espèce, le moyen illustré sur la figure 2 est constitué par un ergot 163.1 solidaire de l'écrou 165.1 du système vis-écrou, et par une lumière axiale associée 164.1 ménagée ici dans la paroi de la tige intérieure 132. De ce fait, le calage angulaire entre les deux composants de la tige coulissante télescopique est garanti par le déplacement respectif de l'ergot saillant dans la lumière axiale, et ce quelle que soit la position respective entre les tiges intérieure et extérieure. Il sera naturellement possible de prévoir, en variante, de rapporter une pièce à l'intérieur de la tige intérieure 132, cette pièce présentant la lumière axiale dans laquelle se déplace un ergot solidaire de l'extension porte-écrou 153.1. Un tel mode de réalisation permettrait d'éviter de pratiquer une lumière sur une pièce structurale travaillant en flexion, surtout lorsque le train est en position rehaussée. Il convient de noter que les seuls moments de rappel dans l'axe sont en fait ceux qui sont engendrés par les cames de calage angulaire 111 et 114, les efforts de torsion lors de l'atterrissage étant repris par le compas unique 140. Il conviendra naturellement de prévoir un compas unique suffisamment long pour avoir une course de rehaussement suffisante.

Ainsi que cela est aisé à comprendre, l'utilisation d'un actionneur linéaire indépendant, avec des moyens de commande autonomes, permet d'obtenir une séparation parfaite des fonctions, et ce sans avoir à prévoir de joint mobile, pour des amortisseurs précédemment décrits en référence aux figures 1 et 2. Il est ainsi possible d'obtenir aisément un rehaussement de l'ordre de 400 mm avec un amortisseur du type précédemment décrit.

Il est naturellement possible de prévoir d'autres types d'actionneurs linéaires pour assurer la fonction de rehaussement, dans la mesure où l'actionneur utilisé est indépendant. On a illustré sur la figure 3 un autre amortisseur conforme à l'invention, dont l'actionneur linéaire n'est plus un actionneur électro-mécanique à système vis-écrou, mais un actionneur électro-hydraulique du type vérin hydraulique.

L'amortisseur 100 illustré en figure 3 comporte, comme celui précédemment décrit en référence à la figure 1, un système de reprise des efforts de torsion structuraux par double compas. Ce principe ne sera donc pas de nouveau décrit. L'amortisseur 100 représenté en figure 3 se différencie de celui illustré en figure 1 par la partie inférieure de sa tige extérieure 131, et par l'agencement intérieur de la tige intérieure 132.

La partie inférieure de la tige extérieure 131 est modifiée de façon à présenter une tige centrale 151.2 s'étendant depuis la cloison 112 jusqu'à un fond intermédiaire 156.2 qui est traversé par la portion supérieure de la tige intérieure 132. Cette tige centrale 151.2 constitue en réalité la tige du vérin hydraulique 150.2, et elle coulisse dans une chambre supérieure 154.2 de la tige intérieure 132 qui est délimitée supérieurement par un fond 163.2 de la tige intérieure 132. Le fond supérieur de cette tige 132 coulisse avec étanchéité (joint 152.2) sur la tige centrale 151.2. La tige intérieure 132 se termine enfin par une extrémité supérieure 153.2 qui est en appui direct contre la cloison 112 lorsque l'amortisseur est détendu ou sous charge statique.

La tige intérieure 132 présente en outre, en-dessous de sa cloison intermédiaire 163.2, une chambre inférieure 155.2 dans laquelle sont prévues une électro-pompe 165.2 avec son bloc électro-distributeur associé 166.2, ainsi qu'une réserve pressurisée 172.2 de fluide hydraulique. L'ensemble 157.2 constitué par l'électro-pompe et le bloc associé d'électro-distribution constituent ainsi les moyens autonomes de commande de l'actionneur électro-hydraulique 150.2. Lorsqu'elle est enclenchée, l'électro-pompe 165.2 débite par un canal associé 164.2 dans la chambre supérieure 154.2 de fluide hydraulique, l'équi-pression, de part et d'autre de la cloison intermédiaire 156.2 étant assuré par des perçages associés 158.2 ménagés dans ladite cloison. La réserve pressurisée 172.2 est de type conventionnel, et comporte un piston 167.2 délimitant inférieurement la chambre 155.2 de fluide hydraulique, piston en-dessous duquel on trouve une chambre de gaz sous pression 168.2 qui est directement adjacente à un volume 170.2 de fluide hydraulique, de façon à réaliser une réserve pressurisée évitant tout risque de cavitation de la pompe hydraulique 165.2. Le remplissage de la réserve pressurisée peut être aisément effectué par le fond 169.2 de la tige intérieure 131, à l'aide d'une valve de type conventionnel 171.2.

Un moyen de verrouillage axial est en outre prévu entre les deux composants de la tige coulissante télescopique 102 lorsque la tige intérieure 132 est en appui contre la cloison intermédiaire 112 de la tige extérieure 131, c'est-à-dire lorsque l'amortisseur est détendu ou sous charge statique. Le moyen de verrouillage axial illustré ici est un moyen mécanique du type à griffes, dont on distingue les griffes 159.2, lesdites griffes étant maintenues, dans la position verrouillée, par un piston plongeur de verrouillage 160.2 coulissant dans un logement intérieur associé 161.2 de la tige centrale 151.2, ledit piston plongeur étant rappelé en position de verrouillage par un ressort associé 162.2. Lorsque l'électro-pompe est enclenchée, le fluide hydraulique provoque la rentrée du piston plongeur 160.2 dans son logement 161.2, ce qui permet de libérer le verrouillage à griffes, et d'autoriser l'extension télescopique de la tige coulissante. Il s'agit d'un verrouillage de sécurité, visant à éviter que la tige intérieure 132 coulisse par rapport à la tige extérieure 131 en cas de fuite. Il convient de noter que le système de verrouillage n'est pas soumis à des efforts verticaux importants, dans la mesure où la tige intérieure reste en appui contre la cloison intermédiaire 112 lorsque l'amortisseur est détendu ou sous charge statique.

Lorsque l'amortisseur est sous charge statique, les deux composants 131 et 132 de la tige coulissante 102 remontent comme un ensemble monolithique dans le caisson de l'amortisseur, et le compas supérieur 124 se déforme en conséquence, le compas inférieur 127 restant quant à lui dans la même position. Lorsque l'on souhaite obtenir un rehaussement du train d'atterrissage, l'électro-pompe 165.2 est enclenchée, et provoque l'extension des deux composants de la tige coulissante télescopique, comme pour l'amortisseur précédemment décrit en référence à la figure 1.

On a illustré en figure 4 une variante de l'amortisseur qui vient d'être décrit, dans laquelle le système de reprise des efforts de torsion structuraux est assuré par un compas unique 140, comme pour l'amortisseur précédemment décrit en référence à la figure 2. Cet amortisseur se différencie du précédent par ce système de compas de reprise d'efforts, mais aussi la présence d'un moyen complémentaire d'anti-rotation. On a représenté ici, pour assurer cette fonction d'anti-rotation entre les deux composants de la tige coulissante télescopique un système à cames 183.2 et 184.2, lesdites cames homologues étant hélicoïdales, et agencées de la même façon que les cames prévues en partie haute de la tige extérieure 132 et sur l'extension centrale du caisson d'amortisseur. A la différence du système à ergot et lumière axiale précédemment décrit en référence à la figure 2, le système à cames homologues représenté ici n'intervient que dans la position "rentrée" de la tige coulissante télescopique, c'est-à-dire lorsque l'amortisseur est détendu ou sous charge statique. En position de rehaussement, ces cames homologues ne coopèrent plus, mais ceci est sans importance dans la mesure où le couplage intervient à nouveau dès que l'amortisseur est détendu.

Il est toutefois possible de remplacer le système précédent par un petit compas 133 reliant la tige intérieure 132 et la tige extérieure 131. Ce petit compas 133, illustré en trait mixte, comporte deux bras articulés 134 et 136, assurant la liaison entre les deux composants de la tige coulissante télescopique par des chapes associées 135 et 137.

L'amortisseur comporte par ailleurs un actionneur linéaire qui est ici un actionneur électro-hydraulique exactement identique à celui précédemment décrit en référence à la figure 3. Il est donc inutile de reprendre la description des organes constitutifs et du fonctionnement de cet actionneur.

On va maintenant décrire les organes électro-hydrauliques associés à la commande de l'électro-pompe 165.2, lesquels organes sont essentiellement logés dans le bloc central 166.2. Ces organes électro-hydrauliques ont été représentés schématiquement sur la figure 5, où l'on distingue le vérin hydraulique 150.2 représenté partiellement.

La liaison entre l'électro-pompe 165.2 et la chambre active du vérin hydraulique est assurée par une première ligne 175.2 comportant un clapet anti-retour 176.2, et arrivant sur une électro-vanne 173.2 en aval de laquelle on trouve une deuxième ligne 164.2. L'électro-pompe 165.2 est reliée à la réserve pressurisée de fluide hydraulique 172.2 par une ligne 174.2. Le retour hydraulique est assuré par une ligne 179.2 menant à la réserve pressurisée 172.2. La génération autonome est enfin complétée par une ligne 177.2 équipée d'un clapet de surpression 178.2. L'électro-vanne 173.2 assure, en position de repos, le retour vers la réserve pressurisée 172.2, conformément à la position illustrée sur la figure 5. Lorsque l'électro-vanne 173.2 est excitée, et que l'électro-pompe 165.2 est activée, cette électro-pompe débite dans la tige mobile du vérin hydraulique, le clapet 178.2 évitant tout risque de surpression dans cette alimentation.

Il devient ainsi possible d'obtenir aisément une modification de l'assiette de l'avion, en jouant simplement sur la commande de l'électro-vanne 173.2 et l'activation de l'électro-pompe 165.2 qui sont associées à l'actionneur linéaire. Lorsque le rehaussement est devenu inutile, il suffit de désexciter l'électro-vanne, laquelle électro-vanne permet, par sa position de repos, un retour automatique sous l'effet de la charge statique exercée sur l'amortisseur, sans qu'il soit besoin de prévoir une commande particulière à cet effet. Après rabaissement, l'amortisseur revient alors à la position initiale qu'il occupait sous charge statique.

On est ainsi parvenu à réaliser un amortisseur dont la structure permet d'obtenir aisément un rehaussement du train lorsque l'avion est à l'arrêt ou en déplacement lent au sol, sans exiger l'utilisation de la génération hydraulique de l'avion. L'amortisseur est en outre de conception simple et l'obtention d'un rehaussement est aisément commandable, sans risque de perturbations et/ou de fuites au regard des circuits de la génération hydraulique de l'avion.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Amortisseur de jambe de train d'atterrissage d'aéronef, comportant un caisson et une tige coulissant dans ledit caisson, avec un fond délimitant une chambre inférieure de fluide hydraulique qui communique par l'intermédiaire d'un diaphragme, avec une chambre supérieure de fluide hydraulique adjacente à une chambre de gaz sous pression ménagée en partie haute du caisson, caractérisé en ce que la tige coulissante (102) est réalisée sous forme télescopique, avec une tige extérieure (131) coulissant dans le caisson (101) et présentant une cloison intermédiaire (112) qui constitue le fond précité, et une tige intérieure (132) coulissant dans la tige extérieure (131) de l'autre côté de cette cloison par rapport à la chambre inférieure de fluide hydraulique (115), en étant en appui direct contre ladite cloison lorsque l'amortisseur est détendu ou sous charge statique, et en ce qu'il comporte en outre un actionneur linéaire (150.1 ; 150.2) logé dans la tige intérieure (132) et dont l'enclenchement permet d'obtenir un rehaussement du train d'atterrissage lorsque l'aéronef est à l'arrêt ou en déplacement lent au sol, et au moins un compas extérieur (124, 127 ; 140) pour la reprise des efforts de torsion structuraux auxquels est soumise la tige coulissante télescopique (102).

2. Amortisseur selon la revendication 1, caractérisé en ce qu'il comporte des moyens autonomes (157.1 ; 157.2) pour la commande de l'actionneur linéaire (150.1 ; 150.2), lesdits moyens autonomes étant au moins en partie intégrés dans la tige intérieure (132).

3. Amortisseur selon la revendication 1 ou la revendication 2, caractérisé en ce qu'il comporte un double compas (124, 127) pour la reprise des efforts de torsion structuraux, avec un compas inférieur (127) reliant la tige intérieure (132) à la tige extérieure (131), et un compas supérieur (124) reliant la tige extérieure (131) à un manchon (120) monté tournant sur le caisson (101).

4. Amortisseur selon la revendication 1 ou la revendication 2, caractérisé en ce qu'il comporte un compas unique (140) reliant la tige intérieure (132) à un manchon (120) monté tournant sur le caisson (101), ainsi qu'un moyen complémentaire d'anti-rotation (163.1, 164.1 ; 183.2, 184.2) entre la tige intérieure (132) et la tige extérieure (131).

5. Amortisseur selon la revendication 4, caractérisé en ce que le moyen complémentaire d'anti-rotation (163.1, 164.1 ; 183.2, 184.2) est au moins en partie intégré dans la tige extérieure (131).

6. Amortisseur selon l'une des revendications 1 à 5, caractérisé en ce que l'actionneur linéaire (150.1) est un actionneur électro-mécanique à système vis-écrou (151.1) dont la vis (152.1) est bloquée axialement et dont l'écrou (165.1) est solidaire de la cloison intermédiaire (112).

7. Amortisseur selon la revendication 6, caractérisé en ce que l'écrou (165.1) du système vis-écrou (151.1) est monté en extrémité d'un manchon central (153.1) solidaire de la cloison intermédiaire (112), dans lequel pénètre la vis (152.1) dudit système vis-écrou, ledit écrou se déplaçant dans une chambre supérieure (154.1) de la tige intérieure (132) et coopérant avec une saillie interne (156.1) de ladite tige intérieure pour former butée en position de rehaussement maximum, la tige intérieure (132) présentant en outre une chambre inférieure (155.1) dans laquelle est reçu, au moins en partie, un ensemble moto-réducteur d'entraînement (157.1).

8. Amortisseur selon les revendications 5 et 7, caractérisé en ce que le moyen complémentaire d'anti-rotation est constitué par un ergot (163.1) coulissant dans une lumière axiale associée (164.1), ledit ergot étant de préférence solidaire de l'écrou (165.1) et pénétrant dans une lumière axiale (164.1) ménagée dans la paroi de la tige intérieure (132).

9. Amortisseur selon l'une des revendications 1 à 5, caractérisé en ce que l'actionneur linéaire (150.2) est un vérin hydraulique dont la tige (151.2) est solidaire de la cloison intermédiaire (112) et coulisse dans une chambre supérieure (154.2) de la tige intérieure (132), ladite tige intérieure présentant en outre une chambre inférieure (155.2) dans laquelle sont prévues une électro-pompe (165.2) et une réserve pressurisée (172.2) de fluide hydraulique.

10. Amortisseur selon la revendication 9, caractérisé en ce que la tige intérieure (132) comporte une cloison intermédiaire (163.2) délimitant lesdites chambres inférieure (155.2) et supérieure (154.2), ladite cloison portant un moyen de verrouillage axial (159.2), par exemple un moyen mécanique à griffes, coopérant avec la tige (151.2) du vérin hydraulique (150.2) lorsque la tige intérieure (132) est en appui contre la cloison intermédiaire (112) de la tige extérieure (131), c'est-à-dire lorsque l'amortisseur est détendu ou sous charge statique.

11. Amortisseur selon les revendications 5 et 10, caractérisé en ce que le moyen complémentaire d'anti-rotation comporte des cames homologues (183.2 ; 184.2) de la tige intérieure (132) et de la cloison intermédiaire (112) de la tige extérieure (131), lesdites cames coopérant mutuellement lorsque l'amortisseur est détendu ou sous charge statique.

12. Amortisseur selon les revendications 5 et 10, caractérisé en ce que le moyen complémentaire d'anti-rotation comporte un petit compas (133) reliant la tige intérieure (132) et la tige extérieure (131).
